# EUROPEAN PATENT SPECIFICATION

(11) **EP 3 730 841 B1**
(45) Date of publication and mention of the grant of the patent: **20.09.2023**
(21) Application number: 18891786.8
(22) Date of filing: 27.09.2018
(51) Int. Cl.: C03C 17/38, C03C 17/34, F24C 15/10, H05B 6/12

(54) **TOP PLATE FOR COOKING DEVICES AND METHOD FOR MANUFACTURING SAME**
DECKPLATTE FÜR KOCHVORRICHTUNGEN UND VERFAHREN ZU DEREN HERSTELLUNG
PLAQUE SUPÉRIEURE POUR DISPOSITIFS DE CUISSON ET SON PROCÉDÉ DE FABRICATION

(30) Priority: 18.12.2017 JP 2017241747; 05.09.2018 JP 2018165760
(43) Date of publication of application: 28.10.2020
(73) Proprietor: Nippon Electric Glass Co., Ltd., Otsu-shi, Shiga 520-8639 (JP)
(72) Inventor: YOKOYAMA, Shohei, Otsu-shi, Shiga 520-8639 (JP); KONISHI, Hirotsugu, Otsu-shi, Shiga 520-8639 (JP); TSUCHIYA, Takeshi, Otsu-shi, Shiga 520-8639 (JP)
(74) Representative: Tetzner, Michael
(86) International application number: PCT/JP2018/035852
(87) International publication number: WO 2019/123756

(56) References cited:
- JP-A- 2011 216 457
- JP-A- 2017 145 168

## Description

The present invention relates to top plates for cooking devices and methods for manufacturing the top plates for cooking devices.

### [Background Art]

A thermally resistant glass substrate made of crystallized glass, borosilicate glass or the like having a low coefficient of thermal expansion is used as a top plate for a cooking device, such as an electromagnetic cooking device, a radiant heater cooking device or a gas cooking device. In using a clear glass substrate as the glass substrate, a light shielding layer or a metallic tone layer is generally formed on the underside surface of the glass substrate located on the side thereof closer to the interior of the cooking device for the purpose of hiding the internal structure of the cooking device or improving the aesthetic appearance of the cooking device.

JP 5 338 304 B2 discloses a glass top plate disposed over a cooking device. In the glass top plate in JP 5 338 304 B2, a pearlized layer is provided on the underside surface of a glass ceramic substrate opposite to a cooking surface thereof. Furthermore, a protective layer is provided on the pearlized layer. The protective layer includes a light shielding portion made of a heat-resistant resin and an inorganic pigment.

JP 2011 216457 A discloses a top plate for an electromagnetic heating cooker including a glass base plate and a heat-resistant resin layer formed on the glass base plate, wherein the heat-resistant resin layer contains inorganic pigment powder and a silicone resin. [Summary of Invention]

### [Technical Problem]

However, if, in the underside surface of a top plate for a cooking device, a heat-resistant resin layer is provided on a layer containing a metallic tone pigment, the cooking device cannot be given a sufficient metallic aspect and may be thus impaired in aesthetic appearance. On the other hand, when, in the absence of the heat-resistant resin layer, a heater or the like makes contact with the top plate for the cooking device, the layer containing a metallic tone pigment may detach from the top plate or may be cracked.

An object of the present invention is to provide: a top plate for a cooking device having a good metallic aspect to enable improvement in aesthetic appearance and exhibiting less detachment of a layer containing a metallic tone pigment and less cracking; and a method for manufacturing the top plate for a cooking device.

### [Solution to Problem]

The present invention provides a top plate for a cooking device according to claim 1. A top plate for a cooking device according to the present invention includes: a glass substrate having a cooking surface on which a cooking utensil is to be put and an underside surface opposite to the cooking surface; a metallic tone layer provided on the underside surface of the glass substrate and containing a glass frit and a first metallic tone pigment; a first heat-resistant resin layer provided on the metallic tone layer and containing a first heat-resistant resin and a second metallic tone pigment; and a second heat-resistant resin layer provided on the first heat-resistant resin layer and containing a second heat-resistant resin and an inorganic pigment, wherein the first metallic tone pigment and the second metallic tone pigment are inorganic pigments coated with a metal oxide and the inorganic pigment of the second heat-resistant resin layer is an inorganic color pigment different from the first metallic tone pigment and the second metallic tone pigment.

In the present invention, the second metallic tone pigment preferably contains a common metallic tone pigment with the first metallic tone pigment.

In the present invention, the first heat-resistant resin layer preferably contains, in terms of % by mass, 40% to 95% first heat-resistant resin and 5% to 60% the second metallic tone pigment.

In the present invention, the metallic tone layer preferably contains, in terms of % by mass, 40% to 60% glass frit and 40% to 60% the first metallic tone pigment.

In the present invention, a content of the second metallic tone pigment per unit volume contained in the first heat-resistant resin layer is preferably smaller than a content of the first metallic tone pigment per unit volume contained in the metallic tone layer.

In the present invention, it is preferred that the first heat-resistant resin layer has a thickness of 1 µm to 30 µm and the metallic tone layer has a thickness of 1 µm to 20 µm.

The present invention provides a method for manufacturing a top plate for a cooking device according to claim 7. A method for manufacturing a top plate for a cooking device according to the present invention is a method for manufacturing the top plate for a cooking device having a structure according to the present invention and includes the steps of: applying on the underside surface of the glass substrate a paste for forming a metallic tone layer, the paste containing the glass frit and the first metallic tone pigment, and then firing the paste to form the metallic tone layer on the underside surface of the glass substrate; applying on the metallic tone layer a paste for forming a first heat-resistant resin layer, the paste containing the first heat-resistant resin and the second metallic tone pigment, and a paste for forming a second heat-resistant resin layer, the paste containing the second heat-resistant resin and the inorganic pigment, in this order; and firing the paste for forming a first heat-resistant resin layer and the paste for forming a second heat-resistant resin layer concurrently or paste by paste .

### [Advantageous Effects of Invention]

The present invention enables provision of: a top plate for a cooking device having a good metallic aspect to enable improvement in aesthetic appearance and exhibiting less detachment of a layer containing a metallic tone pigment and less cracking; and a method for manufacturing the top plate for a cooking device.

### [Brief Description of Drawings]

[Fig. 1]

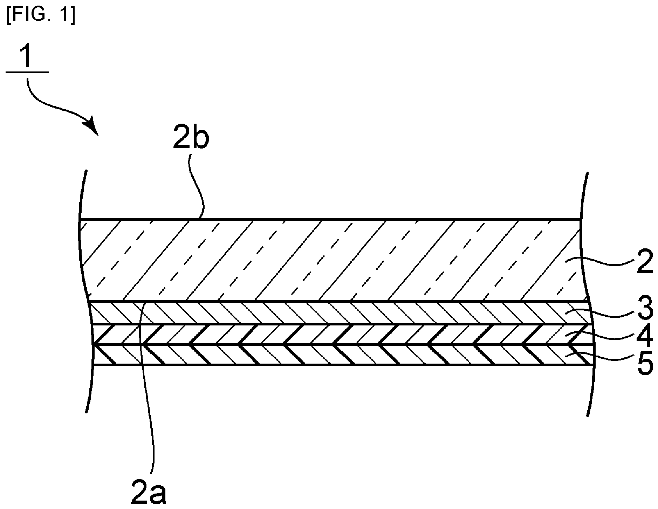

Fig. 1 is a schematic cross-sectional front view showing a top plate for a cooking device according to an embodiment of the present invention.

### [Description of Embodiments]

Hereinafter, a description will be given of preferred embodiments. However, the following embodiments are merely illustrative and the present invention is not limited to the following embodiments. Throughout the drawings, members having substantially the same functions may be referred to by the same reference characters.

### [Top Plate for Cooking Device]

Fig. 1 is a schematic cross-sectional front view showing a top plate for a cooking device according to an embodiment of the present invention. As shown in Fig. 1, a top plate 1 for a cooking device (hereinafter, the "top plate 1 for a cooking device" is referred to simpley as the "top plate 1") includes a glass substrate 2. The glass substrate 2 has: a cooking surface 2b which is one of the principal surfaces; and an underside surface 2a which is the other principal surface. The cooking surface 2b is a surface located on the side of the substrate where a cooking utensil, such as a pot or a frying pan, is to be put. The underside surface 2a is a surface located on the side of the substrate close to the interior of the cooking device and facing a heater. The cooking surface 2b constitutes one side of the substrate and the underside surface 2a constitutes the opposite side of the substrate.

A metallic tone layer 3 is provided on the underside surface 2a of the glass substrate 2. The metallic tone layer 3 is a porous film containing a glass frit and a first metallic tone pigment. However, the metallic tone layer 3 may be a dense film substantially free of pores and no particular limitation is placed on the type of the metallic tone layer 3 so long as it contains the first metallic tone pigment.

A first heat-resistant resin layer 4 is provided on the metallic tone layer 3 (on the opposite side thereof to the side in contact with the glass substrate 2) . The first heat-resistant resin layer 4 contains a first heat-resistant resin and a second metallic tone pigment. In this embodiment, the first heat-resistant resin is clear and colorless. "Clear and colorless" herein means that the light transmittance within a visible wavelength range of 450 nm to 700 nm is 70% or more.

A second heat-resistant resin layer 5 is provided on the first heat-resistant resin layer 4 (on the opposite side thereof to the side in contact with the metallic tone layer 3) . The second heat-resistant resin layer 5 contains a second heat-resistant resin and an inorganic pigment. The inorganic pigment is a pigment different from the first metallic tone pigment and the second metallic tone pigment. In this embodiment, the inorganic pigment is an inorganic color pigment.

This embodiment is mainly characterized in that the first heat-resistant resin layer 4 is provided between the metallic tone layer 3 and the second heat-resistant resin layer 5. Since the first heat-resistant resin layer 4 is provided between the metallic tone layer 3 and the second heat-resistant resin layer 5, the top plate 1 has a good metallic aspect and thereby can improve the aesthetic appearance. The reason for this can be explained as follows.

As described previously, the metallic tone layer 3 is a porous layer containing a glass frit and a first metallic tone pigment. Therefore, if, directly on the metallic tone layer 3, the second heat-resistant resin layer 5 containing as the inorganic pigment a different inorganic pigment, such as inorganic color pigment, is formed, the different inorganic pigment penetrates into the metallic tone layer 3 to impair the metallic aspect.

In contrast, when, as in this embodiment, the first heat-resistant resin layer 4 containing the second metallic tone pigment is provided between the metallic tone layer 3 and the second heat-resistant resin layer 5, the different inorganic pigment contained in the second heat-resistant resin layer 5 is less likely to penetrate into the metallic tone layer 3 because of the presense of the first heat-resistant resin layer 4. Furthermore, the first heat-resistant resin layer 4 is formed directly on the metallic tone layer 3. Therefore, even if the second metallic tone pigment contained in the first heat-resistant resin layer 4 penetrates into the porous metallic tone layer 3, the pigment is a metallic tone pigment and is thus less likely to impair the metallic aspect. Hence, the top plate 1 has a good metallic aspect and can improve the aesthetic appearance.

Furthermore, since the top plate 1 is provided with the first heat-resistant resin layer 4 and the second heat-resistant resin layer 5, even upon contact of a heater or the like with the top plate 1, the resin layers can absorb shocks to prevent the detachment of the metallic tone layer 3 and the cracking of the metallic tone layer 3.

Hereinafter, a description will be given of the details of the layers constituting the top plate 1.

### (Glass Substrate)

The glass substrate 2 transmits at least part of light within a wavelength range of 450 nm to 700 nm. The glass substrate 2 may be clear and colored, but is preferably clear and colorless from the viewpoint of further improving the aesthetic appearance of the top plate 1.

The top plate 1 undergoes heating and cooling repeatedly. Therefore, the glass substrate 2 preferably has high thermal resistance and a low coefficient of thermal expansion. Specifically, the softening temperature of the glass substrate 2 is preferably 700°C or higher and more preferably 750°C or higher. Furthermore, the average coefficient of linear thermal expansion of the glass substrate 2 at 30°C to 750°C is preferably within a range of -10 × 10⁻⁷/°C to +60 × 10⁻⁷/°C, more preferably within a range of -10 × 10⁻⁷/°C to +50 × 10⁻⁷/°C, and still more preferably within a range of -10 × 10⁻⁷/°C to +40 × 10⁻⁷/°C.Therefore, the glass substrate 2 is preferably made of a glass having a high glass transition temperature and low expansibility or made of a low-expansion crystallized glass. A specific example of the low-expansion crystallized glass is "N-0" manufactured by Nippon Electric Glass Co., Ltd. Borosilicate glass or the like may be used as the glass substrate 2.

### (Metallic Tone Layer)

The metallic tone layer 3 contains a glass frit and a first metallic tone pigment.

Examples of the glass frit that can be used include B₂O₃-SiO₂-based glass powders, ZnO-B₂O₃-based glass powders, and SiO₂-Al₂O₃-based glass powders.

The content (proportion) of the glass frit in the metallic tone layer 3 is, in terms of % by mass, perferably not less than 40% but not more than 60%, and more preferably not less than 45% but not more than 55% . When the content of the glass frit is within the above range, the adhesion between the glass substrate 2 and the metallic tone layer 3 can be further increased. The content of the glass frit is a content thereof with 100% by mass representing the total of all the materials contained in the metallic tone layer 3.

The first metallic tone pigment is an inorganic pigment coated with a metal oxide.

Examples of the inorganic pigment in the first metallic tone pigment that can be used include kaolin, talc, sericite, pyrophyllite, mica, aluminum oxide, and silicon oxide. Among them, pearl pigments containing as a base material flakes obtained by grinding natural mica and coated with a metal oxide are preferably used. Alternatively, effect pigments containing as a base material artificially produced flakes, such as alumina flakes, silica flakes or flaky glass, and coated with a metal oxide may be used. Examples of the metal oxides for use in the pearl pigments or the effect pigments include titanium oxide, tin oxide, zirconium oxide, and iron oxide. These first metallic tone pigments may be used singly or in a combination of a plurality of them.

The content (proportion) of the first metallic tone pigment in the metallic tone layer 3 is, in terms of % by mass, preferably not less than 40% but not more than 60%, and more preferably not less than 45% but not more than 55%. When the content of the first metallic tone pigment is within the above range, the metallic aspect of the metallic tone layer 3 can be further increased. The content of the first metallic tone pigment is a content thereof with 100% by mass representing the total of all the materials contained in the metallic tone layer 3.

No particular limitation is placed on the thickness of the metallic tone layer 3. The thickness of the metallic tone layer 3 can be appropriately selected according to, for example, the light transmittance, mechanical strength or coefficient of thermal expansion of the metallic tone layer 3. The metallic tone layer 3 generally has a coefficient of thermal expansion different from the glass substrate 2. Therefore, the metallic tone layer 3 may be damaged by repeated heating and cooling.

From the viewpoint of further reducing the above damage, the thickness of the metallic tone layer 3 is preferably small. The thickness of the metallic tone layer 3 is preferably not less than 1 µm but not more than 20 µm, and more preferably not less than 3 µm but not more than 15 µm.

### (First Heat-Resistant Resin Layer)

The first heat-resistant resin layer 4 contains a first heat-resistant resin and a second metallic tone pigment.

The first heat-resistant resin is preferably clear and colorless. In this case, the metallic aspect of the top plate 1 can be further increased. However, the first heat-resistant resin may be colored without impairing the metallic aspect of the top plate 1.

The first heat-resistant resin preferably has high heat resistance. Examples of the above-mentioned first heat-resistant resin that can be used include silicone resins and polyimide resins. Preferred among them are silicone resins in which a functional group bound directly to a silicon atom is at least one of a methyl group and a phenyl group. In this case, the heat resistance of the top plate 1 can be further increased. The first heat-resistant resins may be used singly or in a combination of a plurality of them.

The content (proportion) of the first heat-resistant resin in the first heat-resistant resin layer 4 is, in terms of % by mass, preferably not less than 40% but not more than 95%, and more preferably not less than 60% but not more than 90%. When the content of the first heat-resistant resin is within the above range, the heat resistance of the top plate 1 can be further increased. The content of the first heat-resistant resin is a content thereof with 100% by mass representing the total of all the materials contained in the first heat-resistant resin layer 4.

Examples of the second metallic tone pigment that can be used include the pearl pigments and effect pigments described in relation to the above-mentioned first metallic tone pigment. As the second metallic tone pigment, the above-mentioned pearl pigments and effect pigments may be used singly or in a combination of a plurality of them.

Furthermore, the second metallic tone pigment may be a metallic tone pigment different from the first metallic tone pigment, but is preferably the same type of metallic tone pigment as the first metallic tone pigment. When the second metallic tone pigment is the same type of metallic tone pigment as the first metallic tone pigment, the metallic aspect of the top plate 1 can be further increased.

When the metallic tone layer 3 contains a plurality of types of first metallic tone pigments, the first heat-resistant resin layer 4 preferably contains the same type of second metallic tone pigment as at least one of the plurality of types of first metallic tone pigments and more preferably contains the same types of second metallic tone pigments as all of the plurality of types of first metallic tone pigments. Also in this case, the metallic aspect of the top plate 1 can be further increased.

The content (proportion) of the second metallic tone pigment in the first heat-resistant resin layer 4 is, in terms of % by mass, preferably not less than 5% but not more than 60%, and more preferably not less than 10% but not more than 40% . When the content of the second metallic tone pigment is within the above range, the metallic aspect of the top plate 1 can be further increased. Furthermore, also when the top plate 1 is repeatedly heated and cooled, detachment due to development of cracks caused by expansion and contraction can be even less likely to occur. The content of the second metallic tone pigment is a content thereof with 100% by mass representing the total of all the materials contained in the first heat-resistant resin layer 4.

The content of the second metallic tone pigment per unit volume contained in the first heat-resistant resin layer 4 is preferably smaller than the content of the first metallic tone pigment per unit volume contained in the metallic tone layer 3. In this case, the first heat-resistant resin layer 4 is likely to penetrate into the metallic tone layer 3 and the second heat-resistant resin layer 5 is less likely to penetrate into the first heat-resistant resin layer 4.

The thickness of the first heat-resistant resin layer 4 is not particularly limited. The thickness of the first heat-resistant resin layer 4 can be appropriately selected according to, for example, the light transmittance of the first heat-resistant resin layer 4. The thickness of the first heat-resistant resin layer 4 may be, for example, about 1 µm to about 30 µm.

### (Second Heat-Resistant Resin Layer)

The second heat-resistant resin layer 5 contains a second heat-resistant resin and an inorganic pigment.

Examples of the second heat-resistant resin that can be used include the silicone resins and polyimide resins described in relation to the above-mentioned first heat-resistant resin. The second heat-resistant resins may be used singly or in a combination of a plurality of them.

The second heat-resistant resin may be a resin different from the first heat-resistant resin, but is preferably the same type of resin as the first heat-resistant resin. When the second heat-resistant resin is the same type of resin as the first heat-resistant resin, the adhesion between the first heat-resistant resin layer 4 and the second heat-resistant resin layer 5 can be further increased.

The content (proportion) of the second heat-resistant resin in the second heat-resistant resin layer 5 is, in terms of % by mass, preferably not less than 40% but not more than 70%, and more preferably not less than 50% but not more than 60%. When the content of the second heat-resistant resin is within the above range, the heat resistance of the top plate 1 can be further increased. The content of the second heat-resistant resin is a content thereof with 100% by mass representing the total of all the materials contained in the second heat-resistant resin layer 5.

The inorganic pigment contained in the second heat-resistant resin layer 5 is a color pigment powder. The color pigment is a colored inorganic substance. With the use of a color pigment powder as the inorganic pigment, the second heat-resistant resin layer 5 can be colored, so that the internal structure of the cooking device can be more certainly hidden.

Examples of the color pigment powder include: white pigment powders, such as TiO₂ powder, ZrO₂ powder, and ZrSiO₄ powder; blue inorganic pigment powders containing Co; green inorganic pigment powders containing Co; Ti-Sb-Cr-based or Ti-Ni-based yellow inorganic pigment powders, Co-Si-based red inorganic pigment powders; brown inorganic pigment powders containing Fe; and black inorganic pigment powders containing Cu.

Specific examples of the blue inorganic pigment powders containing Co include Co-Al-based and Co-Al-Ti-based inorganic pigment powders. A specific example of the Co-Al-based inorganic pigment powders is CoAl₂O₄ powder. A specific example of the Co-Al-Ti-based inorganic pigment powders is Co-Al₂O₄-TiO₂-Li₂O powder.

Specific examples of the green inorganic pigment powders containing Co include Co-Al-Cr-based and Co-Ni-Ti-Zn-based inorganic pigment powders. A specific example of the Co-Al-Cr-based inorganic pigment powders is Co (Al, Cr)₂O₄ powder. A specific example of the Co-Ni-Ti-Zn-based inorganic pigment powders is (Co, Ni, Zn)₂TiO₄ powder.

Specific examples of the brown inorganic pigment powders containing Fe include Fe-Zn-based inorganic pigment powders. A specific example of the Fe-Zn-based inorganic pigment powders is (Zn, Fe) Fe₂O₄ powder.

Specific examples of the black inorganic pigment powders containing Cu include Cu-Cr-based inorganic pigment powders and Cu-Fe-based inorganic pigment powders. Specific examples of the Cu-Cr-based inorganic pigment powders include Cu (Cr, Mn)₂O₄ powder and Cu-Cr-Mn powder. A specific example of the Cu-Fe-based inorganic pigment powders is Cu-Fe-Mn powder.

The content of the inorganic pigment in the second heat-resistant resin layer 5 is, in terms of % by mass, preferably not less than 30% but not more than 60%, and more preferably not less than 40% but not more than 50%. When the content of the inorganic pigment is within the above range, the internal structure of the cooking device can be more effectively hidden. The content of the inorganic pigment is a content thereof with 100% by mass representing the total of all the materials contained in the second heat-resistant resin layer 5.

The thickness of the second heat-resistant resin layer 5 is not particularly limited. The thickness of the second heat-resistant resin layer 5 can be appropriately selected according to, for example, the light transmittance of the second heat-resistant resin layer 5. The thickness of the second heat-resistant resin layer 5 may be, for example, about 1 µm to about 30 µm.

### (Other Embodiments)

The description in the above embodiment has been given of the case where the metallic tone layer 3, the first heat-resistant resin layer 4, and the second heat-resistant resin layer 5 are formed over the entire underside surface 2a of the glass substrate 2. However, the present invention is not limited to this structure. For example, the metallic tone layer 3, the first heat-resistant resin layer 4, and the second heat-resistant resin layer 5 may be formed over a portion of the underside surface 2a of the glass substrate 2. When the cooking device is, for example, an electromagnetic cooking device, the first heat-resistant resin layer 4 and the second heat-resistant resin layer 5 may be provided only over an electromagnetic heating portion of the top plate 1.

Furthermore, the description in the above embodiment has been given of an example where no film is formed on the cooking surface 2b of the glass substrate 2. However, the present invention is not limited to this structure. For example, if necessary, a decorative coating may be formed on the cooking surface 2b for the purposes of improvement in aesthetic appearance, indication of heater positions, and so on.

An additional film may be formed on the underside surface 2a side of the glass substrate 2. For example, a decorative coating may be formed between the glass substrate 2 and the metallic tone layer 3 for the purposes of improvement in aesthetic appearance, indication of heater positions, and so on. Furthermore, a protective layer or the like for the second heat-resistant resin layer 5 may be formed over the second heat-resistant resin layer 5 and/or adhesive layers or the like may be formed between the layers.

### (Method for Manufacturing Top Plate for Cooking Device)

The top plate 1 can be produced, for example, by the following manufacturing method.

First, a metallic tone layer 3 is formed on the underside surface 2a of a glass substrate 2. Specifically, first, a solvent is added to a powder mixture of a glass frit and a first metallic tone pigment powder to turn the powder mixture into paste. The obtained paste for forming a metallic tone layer is applied on the underside surface 2a of the glass substrate 2 using screen printing or other methods and then dried. Next, the dried paste is fired, so that the metallic tone layer 3 can be formed. The firing temperature and the firing time can be appropriately selected according to the compositions of the glass frit and so on to be used or other conditions. The firing temperature can be, for example, about 700°C to about 900°C. The firing time can be, for example, about 10 minutes to about an hour.

Next, a first heat-resistant resin layer 4 is formed on the metallic tone layer 3. Specifically, first, a first heat-resistant resin and a second metallic tone pigment powder are mixed and a solvent is added to the mixture to turn the mixture into paste. The obtained paste for forming a first heat-resistant resin layer is applied on the metallic tone layer 3 by screen printing or other methods and then dried. Next, the dried paste is fired, so that the first heat-resistant resin layer 4 can be formed. The firing temperature and the firing time can be appropriately selected according to the compositions of the resin and so on to be used or other conditions. The firing temperature can be, for example, about 250°C to about 500°C. The firing time can be, for example, about 10 minutes to about an hour.

Next, a second heat-resistant resin layer 5 is formed on the first heat-resistant resin layer 4. Specifically, first, a second heat-resistant resin and an inorganic pigment powder are mixed and a solvent is added to the mixture to turn the mixture into paste. The obtained paste for forming a second heat-resistant resin layer is applied on the first heat-resistant resin layer 4 by screen printing or other methods and then dried. Next, the dried paste is fired, so that the second heat-resistant resin layer 5 can be formed. The firing temperature and the firing time can be appropriately selected according to the compositions of the resin and so on to be used or other conditions. The firing temperature can be, for example, about 250°C to about 500°C. The firing time can be, for example, about 10 minutes to about an hour.

Although in the manufacturing method according to this embodiment a paste for forming a first heat-resistant resin layer is fired and, then, a paste for forming a second heat-resistant resin layer is fired, the paste for forming a first heat-resistant resin layer and the paste for forming a second heat-resistant resin layer may be concurrently fired.

Hereinafter, a description will be given in further detail of the present invention with reference to examples. However, the following examples are merely illustrative. The present invention is not at all limited by the following examples .

### (Example 1)

First, 50% by mass glass frit, 20% by mass metallic pigment A as a first metallic tone pigment, 25% by mass metallic pigment B, and 5% by mass metallic pigment C were mixed and 200% by mass organic solvent was added to the mixture to prepare a paste. The glass frit used was a B₂O₃-SiO₂-based glass powder (manufactured by Nippon Electric Glass Co., Ltd., trade name "NPF"). The metallic pigment A used was a pigment (silvery, average particle diameter: 10 µm to 60 µm) made of mica particles coated with titanium oxide. The metallic pigment B used was a pigment (whitish, average particle diameter: 5 µm to 25 µm) made of mica particles coated with titanium oxide and tin oxide. The metallic pigment C used was a pigment (pinkish, average particle diameter: 5 µm to 50 µm) made of silicon oxide (silica flakes) coated with iron oxide.

Next, the obtained paste was screen-printed (screen mesh: #180M) on the whole of a clear crystallized glass plate (manufactured by Nippon Electric Glass Co., Ltd., trade name: "N-0", average coefficient of linear thermal expansion at 30°C to 750°C: 0.5 × 10⁻⁷/°C) to have a thickness of 20 µm. Thereafter, the paste was dried at 100°C for five minutes and then fired at 800°C for 60 minutes to form a metallic tone layer.

Next, 39% by mass clear silicone resin, 9% by mass metallic pigment A, 9% by mass metallic pigment B, and 4% by mass metallic pigment C were mixed and 39% by mass organic solvent was added to the mixture to prepare a paste. The metallic pigments A, B, and C and organic solvent used were the same as those used for the metallic tone layer. Furthermore, the silicone resin used was one containing both of a methyl group and a phenyl group.

Next, the above paste was screen-printed (screen mesh: #180M) on the whole of the metallic tone layer produced as described above to have a thickness of 10 µm. Thereafter, the paste was dried at 70°C for five minutes and then fired at 300°C for 60 minutes to form a first heat-resistant resin layer.

Next, 34% by mass silicone resin, 2% by mass Cu-Cr-Mn-based black inorganic pigment (inorganic color pigment), and 27% by mass TiO₂ powder were mixed and 37% by mass organic solvent was added to the mixture to prepare a paste. The silicone resin used was the same as that used for the first heat-resistant resin layer.

Next, the above paste was screen-printed (screen mesh: #180M) on the whole of the first heat-resistant resin layer produced as described above to have a thickness of 10 µm. Thereafter, the paste was dried at 70°C for five minutes and then fired at 300°C for 60 minutes to form a second heat-resistant resin layer, thus obtaining a top plate.

### (Examples 2 to 4)

A top plate was obtained in the same manner as in Example 1, except that the first metallic tone pigment was changed to the type and content shown in Table 1 below in forming a metallic tone layer and the silicone resin and the second metallic tone pigment were changed to the types and contents shown in Table 2 below in forming a first heat-resistant resin layer. The contents in Table 2 are indicated as solid contents. A metallic pigment D used was a pigment (orangish, average particle diameter: 5 µm to 35 µm) made of mica particles coated with iron oxide and titanium oxide.

### (Comparative Example 1)

A top plate was produced in the same manner as in Example 1, except that the first heat-resistant resin layer is not provided and the second heat-resistant resin layer was formed directly on the metallic tone layer.

### (Evaluations)

The top plates obtained in Examples 1 to 4 and Comparative Example 1 were visually evaluated in terms of the metallic aspect as viewed from the cooking surface sides of the top plates based on the following criteria. The results are shown in Table 2.

### [Criteria]

Good ... good metallic aspect
Fair ... fairly good metallic aspect
Poor ... poor metallic aspect

A tape pull test was conducted as the method for evaluating film detachment of the top plates obtained in Examples 1 to 4 and Comparative Example 1. Specifically, a Cellophane tape was pressed against a printed portion of each top plate with the finger and then removed and the top plate was visually observed in terms of a portion of the top plate where the tape was removed and the other portion. The sign "Good" represents that no difference was found between the portion of the top plate where the tape was removed and the other portion. The case where a difference was found between the portions is represented by the sign "Poor".

**[Table 1]**

| | | Example 1 | Example 2 | Example 3 | Example 4 | Comparative Example 1 |
|---|---|---|---|---|---|---|
| Metallic tone layer | | metallic pink silver | metallic orange silver | metallic silver silver | metallic silver silver | metallic silver silver |
| Glass frit (% by mass) | | 50 | 50 | 50 | 50 | 50 |
| First metallic tone pigment | Metallic pigment A (% by mass) | 20 | - | 50 | 50 | 50 |
| | Metallic pigment B (% by mass) | 25 | - | - | - | - |
| | Metallic pigment C (% by mass) | 5 | 10 | - | - | - |
| | Metallic pigment D (% by mass) | - | 40 | - | - | - |

**[Table 2]**

| | | Example 1 | Example 2 | Example 3 | Example 4 | Comparative Example 1 |
|---|---|---|---|---|---|---|
| First heat-resistant resin (silicone resin) (% by mass) | | 62 | 62 | 90.5 | 33 | - |
| Second metallic tone pigment | Metallic pigment A (% by mass) | 15.5 | - | 9.5 | 67 | - |
| | Metallic pigment B (% by mass) | 15.5 | - | - | - | - |
| | Metallic pigment C (% by mass) | 7 | - | - | - | - |
| | Metallic pigment D (% by mass) | - | 38 | - | - | - |
| Evaluation of metallic aspect | | Good | Good | Good | Fair | Poor |
| Evaluation of film detachment | | Good | Good | Good | Good | Poor |

As is obvious from Table 2, it was confirmed that the top plates in Examples 1 to 4 each including the first heat-resistant resin layer had good metallic aspects and caused less detachment of layers containing metallic tone pigments and less cracking as compared to the top plate in Comparative Example 1 without the first heat-resistant resin layer.

### [Reference Signs List]

- 1: top plate for cooking device
- 2: glass substrate
- 2a: underside surface
- 2b: cooking surface
- 3: metallic tone layer
- 4: first heat-resistant resin layer
- 5: second heat-resistant resin layer

## Claims

1. A top plate (1) for a cooking device comprising:
a glass substrate (2) having a cooking surface (2b) on which a cooking utensil is to be put and an underside surface (2a) opposite to the cooking surface (2b);
a metallic tone layer (3) provided on the underside surface (2a) of the glass substrate (2) and containing a glass frit and a first metallic tone pigment;
a first heat-resistant resin layer (4) provided on the metallic tone layer (3) and containing a first heat-resistant resin and a second metallic tone pigment; and
a second heat-resistant resin layer (5) provided on the first heat-resistant resin layer (4) and containing a second heat-resistant resin and an inorganic pigment,
wherein the first metallic tone pigment and the second metallic tone pigment are inorganic pigments coated with a metal oxide and the inorganic pigment of the second heat-resistant resin layer (5) is an inorganic color pigment different from the first metallic tone pigment and the second metallic tone pigment.

2. The top plate (1) for a cooking device according to claim 1, wherein the second metallic tone pigment contains a common metallic tone pigment with the first metallic tone pigment.

3. The top plate (1) for a cooking device according to claim 1 or 2, wherein the first heat-resistant resin layer (4) contains, in terms of % by mass, 40% to 95% first heat-resistant resin and 5% to 60% the second metallic tone pigment.

4. The top plate (1) for a cooking device according to any one of claims 1 to 3, wherein the metallic tone layer (3) contains, in terms of % by mass, 40% to 60% glass frit and 40% to 60% the first metallic tone pigment.

5. The top plate (1) for a cooking device according to any one of claims 1 to 4, wherein a content of the second metallic tone pigment per unit volume contained in the first heat-resistant resin layer (4) is smaller than a content of the first metallic tone pigment per unit volume contained in the metallic tone layer (3).

6. The top plate (1) for a cooking device according to any one of claims 1 to 5, wherein
the first heat-resistant resin layer (4) has a thickness of 1 µm to 30 µm, and
the metallic tone layer (3) has a thickness of 1 µm to 20 µm.

7. A method for manufacturing the top plate (1) for a cooking device according to any one of claims 1 to 6, the method comprising the steps of:
applying on the underside surface (2a) of the glass substrate (2) a paste for forming a metallic tone layer (3), the paste containing the glass frit and the first metallic tone pigment, and then firing the paste to form the metallic tone layer (3) on the underside surface of the glass substrate (2);
applying on the metallic tone layer (3) a paste for forming a first heat-resistant resin layer (4), the paste containing the first heat-resistant resin and the second metallic tone pigment, and a paste for forming a second heat-resistant resin layer (5), the paste containing the second heat-resistant resin and the inorganic pigment, in this order; and
firing the paste for forming a first heat-resistant resin layer (4) and the paste for forming a second heat-resistant resin layer (5) concurrently or paste by paste.

## Patentansprüche

1. Oberplatte (1) für ein Kochgerät, umfassend:
ein Glassubstrat (2), welches eine Kochfläche (2b), auf die ein Kochgeschirr gestellt werden soll, und eine Unterseite (2a) gegenüber der Kochfläche (2b) aufweist,
eine Metalltonschicht (3), die auf der Unterseite (2a) des Glassubstrats (2) vorgesehen ist und eine Glasfritte und ein erstes Metalltonpigment enthält,
eine erste hitzebeständige Harzschicht (4), die auf der Metalltonschicht (3) vorgesehen ist und ein erstes hitzebeständiges Harz und ein zweites Metalltonpigment enthält, und
eine zweite hitzebeständige Harzschicht (5), die auf der ersten hitzebeständigen Harzschicht (4) vorgesehen ist und ein zweites hitzebeständiges Harz und ein anorganisches Pigment enthält,
wobei das erste Metalltonpigment und das zweite Metalltonpigment anorganische Pigmente sind, die mit einem Metalloxid beschichtet sind, und das anorganische Pigment der zweiten hitzebeständigen Harzschicht (5) ein anorganisches Farbpigment ist, das sich von dem ersten Metalltonpigment und dem zweiten Metalltonpigment unterscheidet.

2. Oberplatte (1) für ein Kochgerät nach Anspruch 1, wobei das zweite Metalltonpigment ein Metalltonpigment enthält, das mit dem ersten Metalltonpigment gemeinsam ist.

3. Oberplatte (1) für ein Kochgerät nach Anspruch 1 oder 2, wobei die erste hitzebeständige Harzschicht (4) in Massenprozent 40 bis 95 % erstes hitzebeständiges Harz und 5 % bis 60 % des zweiten metallischen Tonpigments enthält.

4. Oberplatte (1) für ein Kochgerät nach einem der Ansprüche 1 bis 3, wobei die Metalltonschicht (3) in Massenprozent 40 bis 60 % Glasfritte und 40 bis 60 % des ersten metallischen Tonpigments enthält.

5. Oberplatte (1) für ein Kochgerät nach einem der Ansprüche 1 bis 4, wobei ein Gehalt des zweiten Metalltonpigments pro Volumeneinheit, welches in der ersten hitzebeständigen Harzschicht (4) enthalten ist, kleiner als ein Gehalt des ersten Metalltonpigments pro Volumeneinheit ist, welches in der Metalltonschicht (3) enthalten ist.

6. Oberplatte (1) für ein Kochgerät nach einem der Ansprüche 1 bis 5, wobei
die erste hitzebeständige Harzschicht (4) eine Dicke von 1 µm bis 30 µm aufweist und
die Metalltonschicht (3) eine Dicke von 1 µm bis 20 µm aufweist.

7. Verfahren zur Herstellung der Oberplatte (1) für ein Kochgerät nach einem der Ansprüche 1 bis 6, das Verfahren umfassend die Schritte:
Auftragen auf die Unterseite (2a) des Glassubstrats (2) einer Paste zur Bildung einer Metalltonschicht (3), wobei die Paste die Glasfritte und das erste Metalltonpigment enthält, und dann Brennen der Paste, um die Metalltonschicht (3) auf der Unterseite des Glassubstrats (2) zu bilden,
Auftragen auf die Metalltonschicht (3) einer Paste zur Bildung einer ersten hitzebeständigen Harzschicht (4), wobei die Paste das erste hitzebeständige Harz und das zweite Metalltonpigment enthält, und einer Paste zur Bildung einer zweiten hitzebeständigen Harzschicht (5), wobei die Paste das zweite hitzebeständige Harz und das anorganische Pigment enthält, in dieser Reihenfolge, und
Brennen der Paste zur Bildung einer ersten hitzebeständigen Harzschicht (4) und der Paste zur Bildung einer zweiten hitzebeständigen Harzschicht (5) gleichzeitig oder Paste für Paste.

## Revendications

1. Plaque supérieure (1) pour un dispositif de cuisson, ladite plaque supérieure comprenant :
un substrat en verre (2) ayant une surface de cuisson (2b) sur laquelle un ustensile de cuisson doit être placé, et ayant une surface inférieure (2a) opposée à la surface de cuisson (2b) ;
une couche de teinte métallisée (3) prévue sur la surface inférieure (2a) du substrat en verre (2) et contenant une fritte de verre et un premier pigment de teinte métallisée ;
une première couche de résine thermorésistante (4) prévue sur la couche de teinte métallisée (3) et contenant une première résine thermorésistante et un second pigment de teinte métallisée ; et
une seconde couche de résine thermorésistante (5) prévue sur la première couche de résine thermorésistante (4) et contenant une seconde résine thermorésistante et un pigment inorganique,
plaque supérieure dans laquelle le premier pigment de teinte métallisée et le second pigment de teinte métallisée sont des pigments inorganiques recouverts d'un oxyde métallique, et le pigment inorganique de la seconde couche de résine thermorésistante (5) est un pigment de couleur inorganique du premier pigment de teinte métallisée et du second pigment de teinte métallisée.

2. Plaque supérieure (1) pour un dispositif de cuisson selon la revendication 1, plaque supérieure dans laquelle le second pigment de teinte métallisée contient un pigment de teinte métallisée en commun avec le premier pigment de teinte métallisée.

3. Plaque supérieure (1) pour un dispositif de cuisson selon la revendication 1 ou 2, plaque supérieure dans laquelle la première couche de résine thermorésistante (4) contient, en termes de % en masse, de 40 % à 95 % de la première résine thermorésistante et de 5 % à 60 % du second pigment de teinte métallisée.

4. Plaque supérieure (1) pour un dispositif de cuisson selon l'une quelconque des revendications 1 à 3, plaque supérieure dans laquelle la couche de teinte métallisée (3) contient, en termes de % en masse, de 40 % à 60 % de fritte de verre et de 40 % à 60 % du premier pigment de teinte métallisée.

5. Plaque supérieure (1) pour un dispositif de cuisson selon l'une quelconque des revendications 1 à 4, plaque supérieure dans laquelle une teneur en second pigment de teinte métallisée, par volume unitaire contenu dans la première couche de résine thermorésistante (4), est inférieure à une teneur en premier pigment de teinte métallisée par volume unitaire contenu dans la couche de teinte métallisée (3).

6. Plaque supérieure (1) pour un dispositif de cuisson selon l'une quelconque des revendications 1 à 5, plaque supérieure dans laquelle :
la première couche de résine thermorésistante (4) a une épaisseur de 1 µm à 30 µm, et
la couche de teinte métallisée (3) a une épaisseur de 1 µm à 20 µm.

7. Procédé de fabrication de la plaque supérieure (1) pour un dispositif de cuisson selon l'une quelconque des revendications 1 à 6, le procédé comprenant les étapes consistant :
à appliquer sur la surface inférieure (2a) du substrat en verre (2) une pâte pour former une couche de teinte métallisée (3), ladite pâte contenant la fritte de verre et le premier pigment de teinte métallisée, ledit procédé consistant ensuite à cuire la pâte afin de former la couche de teinte métallisée (3) sur la surface inférieure du substrat en verre (2) ;
à appliquer sur la couche de teinte métallisée (3) une pâte pour former une première couche de résine thermorésistante (4), ladite pâte contenant la première résine thermorésistante et le second pigment de teinte métallisée, et à appliquer une pâte pour former une seconde couche de résine thermorésistante (5), ladite pâte contenant, dans cet ordre, la seconde résine thermorésistante et le pigment inorganique ; et
à cuire la pâte pour former une première couche de résine thermorésistante (4) et à cuire la pâte pour former une seconde couche de résine thermorésistante (5), lesdites pâtes étant cuites en même temps ou pâte par pâte.
